## Europäisches Patentamt
## European Patent Office
## Office européen des brevets

(19)

(11) Publication number: **0 006 361**
**B1**

(12) # EUROPEAN PATENT SPECIFICATION

(45) Date of publication of patent specification: **23.06.82**

(21) Application number: **79301172.7**

(22) Date of filing: **18.06.79**

(51) Int. Cl.³: **G 01 D 11/28,**
**G 12 B 11/00**

(54) **An illuminated indicator gauge.**

(30) Priority: **21.06.78 JP 84057/78**

(43) Date of publication of application:
**09.01.80 Bulletin 80/1**

(45) Publication of the grant of the patent:
**23.06.82 Bulletin 82/25**

(84) Designated Contracting States:
**DE FR GB**

(56) References cited:
**DE - A - 2 405 386**
**FR - A - 1 145 934**
**US - A - 2 831 453**
**US - A - 2 900 949**
**US - A - 3 043 038**
**US - A - 3 214 577**

(73) Proprietor: **NISSAN MOTOR COMPANY, LIMITED**
**No.2, Takara-cho, Kanagawa-ku**
**Yokohama-shi Kanagawa-ken (JP)**

(72) Inventor: **Ishikawa, Masao**
**3-5-20, Nakahara**
**Isogo-ku, Yokohama City (JP)**
Inventor: **Nakamura, Kenji**
**3-68, Oppama-higashicho**
**Yokosuka City (JP)**
Inventor: **Ajimine, Akio**
**No.6-17-12, Matsubara**
**Setagaya-ku, Tokyo (JP)**

(74) Representative: **Freed, Arthur Woolf et al,**
**MARKS & CLERK 57-60 Lincoln's Inn Fields**
**London WC2A 3LS (GB)**

Courier Press, Leamington Spa, England.

# An illuminated indicator gauge

The present invention relates in general to an illuminated indicator gauge such as illuminated speedometer or tachometer for a motor vehicle, and more particularly to such a gauge having an illuminated pointer.

In one present-day type of illuminated indicator gauge a pointer of a transparent material is illuminated internally or from within by light rays which come thereto from light sources, travelling through the dial board and reflecting on a light reflecting surface located adjacent an opening of the dial board through which a spindle of a movement passes. However, in this type of gauge, utilization of the light from the light sources for the internal illumination of the pointer has not been made effective. U.S. Patent Specification No. 2 900 949 does show an example of an illuminated indicator gauge having a pointer of a transparent material which is illuminated by light rays which come to the pointer through a dial board of transparent material. In detail, in this U.S. Specification, the pointer which is of a transparent material is connected at its hub-section to a spindle mounted for rotation about an axis of an opening in the dial board so that the pointer moves over the face of the dial board in response to rotation of the spindle about its axis. Each corner of the dial board constitutes a light guiding plate and is formed with a cylindrical opening in which a light source is disposed. The light from each light source is guided to some extent by the edge of the light guiding plate in which it is disposed and is reflected at the side of the opening into the pointer. A further reflection takes place within the pointer to reflect the light along the pointer to provide illumination of the pointer. With this arrangement, the quantity of light from each light source which actually reaches the pointing section of the pointer is relatively small as light can leave the light source and enter the dial board in a direction in which it does not reach the opening and is therefore never reflected into the pointer.

It is an object of the present invention to provide an illuminated indicator gauge in which the light from the light source is relatively effectively used for illumination of a pointer.

According to the present invention there is provided an illuminated indicator gauge comprising a dial board including a transparent plate and having an opening formed therethrough; a spindle passing through the opening of the dial board; a pointer of a transparent material connected at its hub section to the spindle to move over the face of the dial board in response to rotation of the spindle about its axis; a light guiding plate of a transparent material integrally connected to a peripheral edge portion of the transparent plate, said light guiding plate being formed at its end portion at a distance from said peripheral edge portion of the transparent plate with a round recess; a light source spacedly located in said round recess for producing light which travels within said light guiding plate, the transparent plate and the pointer for entire illumination of both said transparent plate and said pointer from within; a first light reflecting surface formed on a wall by which the opening of the dial board is bounded, the first light reflecting surface reflecting the light coming thereto toward the hub section of the pointer; a second light reflecting surface formed on the hub section of said pointer for reflecting the light from the first light reflecting surface toward the pointing section of the pointer; and a third light reflecting surface formed on a peripheral edge section of said light guiding plate, said third light reflecting surface being so formed to reflect the light which enters the light guiding plate through said round recess toward the integrally connected portion where said light guiding plate and said transparent plate are integrally connected, for focusing the light at the first light reflecting surface, characterized in that a convex surface is formed on the bottom of said round recess to constitute a convex lens so that the light rays coming thereto from the light source can travel parallelly within said light guiding plate toward said first light reflecting surface of said transparent plate, in that the opening (18) is enlarged at its inboard section to form a generally trigonal prism-shaped chamber, in that the first light reflecting surface (18a, 18b) is formed on one of two slanted flat surfaces which partly define the trigonal prism-shaped chamber and in that the second light reflecting surface (22a) is at a non-zero angle to the axis of the spindle (20) and the longitudinal direction of the pointer (22).

With an illuminated indicator gauge in accordance with this invention, the convex surface provided at the bottom of the round recess constitutes a convex lens. This convex lens will transmit the light rays from the light source within the light guiding plate in parallel towards the first light reflecting surface. Consequently, a greater proportion of the light from the light source reaches the first reflecting surface.

Embodiments of the present invention will now be described, by way of example with reference to the accompanying drawings, in which:—

Figure 1 is a plan view of the essential part of a first illuminated indicator gauge according to the invention, both the pointer and the graduated plate being not shown for easy understanding of the essential part;

Figure 2 is a sectional view taken along the line II—II of Figure 1;

Figure 3 is a view similar to Figure 1, but shows the second embodiment of the invention;

Figure 4 is a side view taken from the direction of IV—IV of Figure 3; and

Figure 5 is a sectional view taken along the line V—V of Figure 3.

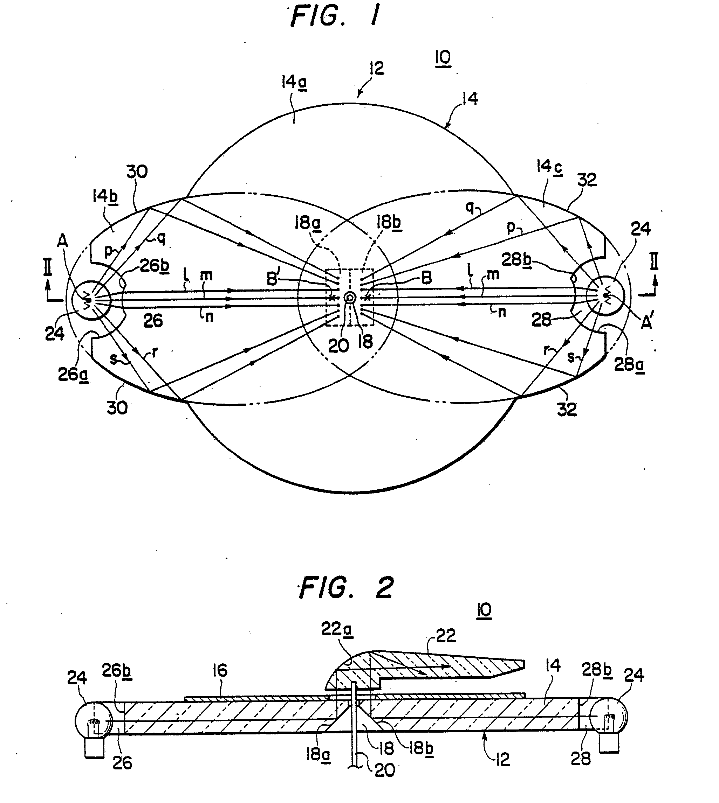

Referring to Figures 1 and 2, there is illustrated a first embodiment of the present invention, which is an indicator gauge 10. The gauge 10 generally comprises a dial board 12 made of a transparent plate 14 of even thickness with a top layer of a graduated plate 16 (see Figure 2). The dial board 12 is formed at the central portion thereof with an opening 18 through which a spindle 20 extending from a movement (not shown) of the gauge 10 spacedly passes. A pointer 22 (see Figure 2) made of a transparent material is mounted at its hub section on the leading end of the spindle 20 so as to move over the face of the dial board 12 in response to rotation of the spindle 20 about the axis thereof. Two lamps 24 are located at laterally opposite positions with respect to the central portion of the dial board 12.

In addition to the above, the following measures are used. As is seen from Figure 1, the transparent plate 14 consists of a main rounded section 14a and two light guiding plate sections or laterally projecting rounded sections 14b and 14c, the sections 14b and 14c being positioned symmetrically with respect to the opening 18 of the dial board 12. Each of these projecting rounded sections 14b and 14c is formed at an outer portion with a rounded recess 26 or 28 which is sized to spacedly receive therein one of the lamps 24. The surface 26a or 28a by which the recess 26 or 28 is bounded forms a part of a cylindrical surface of a cylinder the longitudinal axis of which passes through or at least near the centre "A" or "A'" of the light source proper of each lamp 24 perpendicularly to the face of the dial board 12. At the bottom of each recess 26 or 28, a convex surface 26b or 28b is provided which is constructed to permit the light rays coming thereto from the lamp 24 to travel in parallel in the transparent plate 14 toward the opening 18 in a manner as is indicated by lines "l", "m" and "n". Further, the peripheral surfaces 30 or 32 of each rounded section 14b or 14c except where the recess 26 or 28 is located are so shaped as to form parts of a curved surface of an elliptic cylinder the cross-section of which has its focuses at the point "A" and the point "B" or "A'" and "B'", the points "B" and "B'" being positioned in the vicinity of the opening 18, the focus "B" being for the ellipse corresponding to the surface 30, while the focus "B'" being for the ellipse corresponding to the surface 32. The opening 18 is enlarged at its inner end to form a generally trigonal prism-shaped chamber which is bounded by two slanted flat surfaces 18a and 18b. Each surface 18a or 18b is inclined about 45 degrees with respect to an imaginary plane which includes the axis of the spindle 20 and is perpendicular to an imaginary line passing through the centres "A" and "A'" of the lamps 24. It should be noted that the point "B" is located within the surface 18b, while the point "B'" is within the surface 18a. As is understood from Figure 2, the graduated plate 16 is not applied to a portion of the plate 14 where the opening 18 is located. The hub section of the pointer 22 is formed on its outboard side with a curved light reflecting surface 22a which is constructed to reflect the light coming thereto from the slanted surfaces 18a and 18b toward the top section of the pointer 22 for internal illumination of the same.

With the above-stated construction, among the light rays emitted from the lamps 24, the light rays, such as the ones designated by references "l", "m" and "n", which are directed toward the centre of the plate 14 enter the plate 14 through the convex surfaces 26b and 28b and travel in the plate 14 in parallel towards the slanted surfaces 18a and 18b of the opening 18. In contrast, the light rays, such as ones designated by references "p", "q", "r" and "s", which deviate widely from the direction toward the centre of the plate 14 enter the plate 14 through the round surface 26a and 28a and travel toward the round peripheral surfaces 30 and 32. It should be now noted that almost all light rays coming to the surfaces 26a and 28a from the lamps 24 can enter the plate 14 without being reflected or refracted at the surface 26a and 28a since, as has been mentioned before, each of these surfaces is formed to constitute a part of a cylindrical surface of which axis passes through or at least near the point "A" or "A'" perpendicularly to the face of the plate 14. The light rays coming to the surfaces 30 and 32 are then reflected thereon to be directed toward the focuses "B" and "B'". The light rays "l", "m", "n", "p", "q", "r" and "s" which are thus directed toward the opening 18 of the plate 14 are then reflected on the slanted surfaces 18a and 18b to be directed toward the hub section of the pointer 22, as is understood from Figure 2. The light rays entering the hub section are then reflected on the curved surfaces 22a to be directed toward the top of the pointer 22 for illumination of the same from within. It should be thus noted that the light rays produced by the lamps 24 are highly efficiently used for illumination of the pointer 22, thus illumination of the pointer 22 is much enhanced in comparison with that of the conventional illuminated indicator gauge.

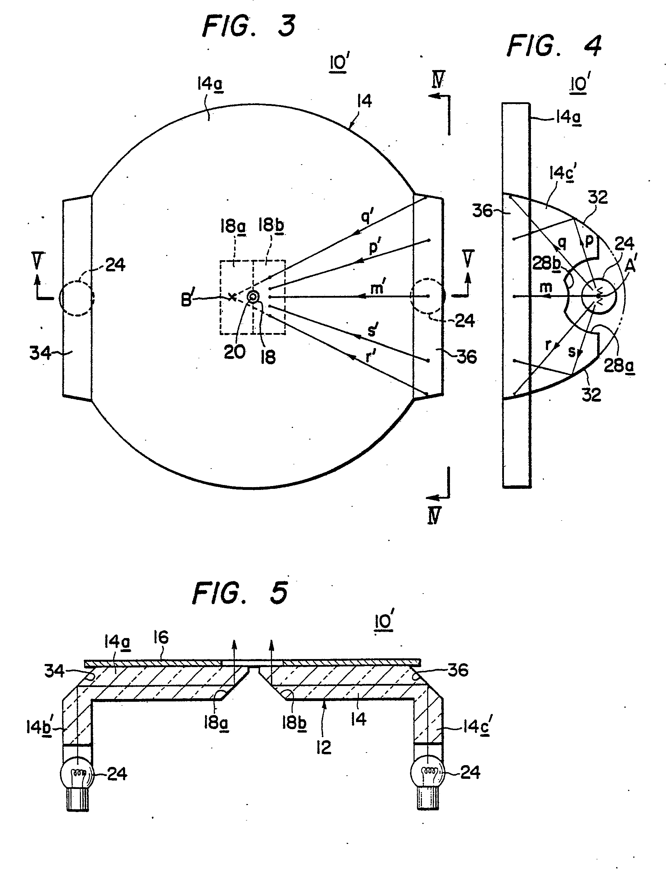

Referring to Figures 3 to 5, there is illustrated a second embodiment of the invention. In the indicator gauge 10' of this embodiment, two bent round sections 14b' and 14c' are formed on lateral sides of the main rounded section 14a as a substitute for the laterally projecting rounded sections 14b and 14c of the first embodiment of Figures 1 and 2. The rounded sections 14b' and 14c' extend perpendicularly with respect to the face of the transparent plate 14 of the dial board 12. At the connecting portions where the rounded sections

14*b'* and 14*c'* are integrally jointed with the main rounded section 14*a*, slanted flat surfaces 34 and 36 are formed each having the inclination of about 45 degrees with respect to the surface of the main rounded section 14*a* of the dial board 12. Other portions and parts of this embodiment are constructed in the same way as in the case of the first embodiment, thus the explanation of those will be omitted and those are designated by the same reference numerals as in the first embodiment.

With the above-stated construction, the light rays which are emitted from the lamps 24 enter the rounded sections 14*b'* and 14*c'* taking such travelling courses as indicated by the lines "p", "q", "m", "r" and "s" in Figure 4. The light rays are then reflected by the slanted flat surface 34 and 36 to be directed toward the opening 18 in the manner as is indicated by the lines "q'", "p'", "m'", "s'" and "r'" in Figure 3, that is substantially in the same manner as in the case of first embodiment. Thus, effective illumination of the pointer by such light rays is made also in this second embodiment. In this embodiment, compactness of the indicator gauge is accomplished because the lateral size of the dial board 12 can be made small.

Although the above-mentioned embodiments show the cases wherein two lamps are employed, one, three or more lamps can be employed by slightly modifying each embodiment.

Thus, according to the present invention, effective utilization of the light from the light sources is accomplished, thereby enhancing the internal illumination effect of the pointer.

## Claims

1. An illuminated indicator gauge comprising a dial board (12) including a transparent plate (14) and having an opening (18) formed therethrough; a spindle (20) passing through the opening (18) of the dial board (12); a pointer (22) of a transparent material connected at its hub section to the spindle (20) to move over the face of the dial board (12) in response to rotation of the spindle (20) about its axis; a light guiding plate (14b, 14c, 14b', 14c') of a transparent material integrally connected to a peripheral edge portion of the transparent plate (14), said light guiding plate being formed at its end portion at a distance from said peripheral edge portion of the transparent plate with a round recess (26, 28); a light source (24) spacedly located in said round recess for producing light which travels within said light guiding plate, the transparent plate (14) and the pointer (22) for entire illumination of both said transparent plate and said pointer from within; a first light reflecting surface (18a, 18b) formed on a wall by which the opening (18) of the dial board (12) is bounded, the first light reflecting surface (18a, 18b) reflecting the light coming thereto toward the hub section of the pointer; a second light reflecting surface (22a) formed on the hub section of said pointer for reflecting the light from the first light reflecting surface (18a, 18b) toward the pointing section of the pointer (22); and a third light reflecting surface (30, 32) formed on a peripheral edge section of said light guiding plate, said third light reflecting surface being so formed to reflect the light which enters the light guiding plate through said round recess toward the integrally connected portion where said light guiding plate and said transparent plate are integrally connected, for focusing the light at the first light reflecting surface, characterized in that a convex surface (26b, 28b) is formed on the bottom of said round recess to constitute a convex lens so that the light rays coming thereto from the light source (24) can travel parallelly within said light guiding plate toward said first light reflecting surface (18a, 18b) of said transparent plate (14), in that the opening (18) is enlarged at its inboard section to form a generally trigonal prism-shaped chamber, in that the first light reflecting surface (18a, 18b) is formed on one of two slanted flat surfaces which partly define the trigonal prism-shaped chamber and in that the second light reflecting surface (22a) is at a non-zero angle to the axis of the spindle (20) and the longitudinal direction of the pointer (22).

2. An illuminated indicator gauge according to claim 1, characterized in that the surface (26a, 28a; 26'a, 28'b) by which said round recess (26, 28) is bounded is a part-cylindrical surface of a cylinder the longitudinal axis of which passes through the centre of said light source (24) perpendicularly to the face of said light guiding plate.

3. An illuminated indicator gauge according to claim 2, characterized in that said light guiding plate is arranged to laterally outwardly extend from said transparent plate (14) so that the face of said light guiding plate is flush with the face of said transparent plate (14).

4. An illuminated indicator gauge according to claim 3, characterized in that the third light reflecting surface (30, 32) is constructed to form a part of a curved surface of an elliptic cylinder of which the cross-section has a focus at the centre of said light source (24) and the other focus in the vicinity of the opening (18) of said dial board (12).

5. An illuminated indicator gauge according to claim 2, characterized in that said light guiding plate is arranged to be perpendicular to said transparent plate (14) so that the face of said light guiding plate is normal to the face of said transparent plate (14).

6. An illuminated indicator gauge according to claim 5, characterized in that the integrally connected portion where said light guiding plate and said transparent plate (14) are integrally connected is formed with a fourth light reflecting surface (34, 36) by which the light coming thereto from the light source (24) is reflected toward said first light reflecting surface (18a, 18b).

**Revendications**

1. Indicateur éclairé comprenant un cadran (12) comportant une plaque transparente (14) et ayant une ouverture (18) qui le traverse; un axe (20) traversant l'ouverture (18) du cadran (12); une aiguille (22) en un matériau transparent connectée par sa section de moyeu à l'axe (20) pour se déplacer sur la face du cadran (12) en réponse à la rotation de l'axe (20) autour de son axe; une plaque de guidage de la lumière (14b, 14c, 14b', 14c') en un matériau transparent intégralement connectée à un bord périphérique de la plaque transparente (14), ladite plaque guidant la lumière ayant, à sa partie extrême à une certaine distance dudit bord périphérique de la plaque transparente, un évidement rond (26, 28); une source de lumière (24) placée en étant espacée dans ledit évidement rond pour produire de la lumière qui se déplace dans ladite plaque de guidage de la lumière, la plaque transparent (14) et l'aiguille (22) pour un éclairement complet de ladite plaque transparente et de ladite aiguille à partir de l'intérieur; une première surface réfléchissant la lumière (18a, 18b) formée sur une paroi par laquelle l'ouverture (18) du cadran (12) est délimitée, la première surface réfléchissant la lumière (18a, 18b) réfléchissant la lumière qui lui parvient vers la section de moyeu de l'aiduille; une seconde surface réfléchissant la lumière (22a) formée sur la section de moyeu de ladite aiguille pour réfléchir la lumière de la première surface réfléchissant la lumière (18a, 18b) vers la section d'indication de l'aiguille (22); et une troisième surface réfléchissant la lumière (30, 32) formé sur un bord périphérique de ladite plaque de guidage de la lumière, ladite troisième surface réfléchissant la lumière étant formé de façon à réfléchir la lumière qui entre dans la plaque de guidage de la lumière à travers ledit évidement rond vers la partie intégralement connectée où sont intégralement connectées ladite plaque de guidage de la lumière et ladite plaque transparente, pour focaliser la lumière sur la première surface réfléchissant la lumière, caractérisé en ce qu'une surface convexe (26b, 28b) est formée au fond dudit évidement rond pour constituer une lentille convexe afin que les rayons lumineux qui y parviennent de la source de lumière (24) puissent se déplacer parallèlement dans ladite plaque de guidage de la lumière vers ladite première surface réfléchissant la lumière (18a, 18b) de ladite plaque transparente (14), en ce que l'ouverture (18) est agrandie à sa section vers l'intérieur pour former une chambre en prisme généralement trigonal, en ce que la première surface réfléchissant la lumière (18a, 18b) est formée sur l'une des deux surfaces plates et obliques qui définissent partiellement la chambre en forme de prisme trigonal et en ce que la seconde surface réfléchissant la lumière (22a) est à un angle non nul par rapport à l'axe de l'axe (20) et à la direction longitudinale de l'aiguille (22).

2. Indicateur éclairé selon la revendication 1, caractérisé en ce que la surface (26a, 28a; 26'a, 28'b) par laquelle l'évidement rond (26, 28) est délimité est une surface partiellement cylindrique d'un cylindre dont l'axe longitudinal passe par le centre de la source de lumière (24) perpendiculairement à la face de ladite plaque de guidage de là lumière.

3. Indicateur éclairé selon la revendication 2, caractérisé en ce que ladite plaque de guidage de la lumière est agencée pour s'étendre latéralement vers l'extérieur de ladite plaque transparente (14) afin que la face de ladite plaque guidant la lumière soit à fleur avec la face de ladite plaque transparents (14).

4. Indicateur éclairé selon la revendication 3, caractérisé en ce que la troisième surface réfléchissant la lumière (30, 32) est construite pour fair partie d'une surface courbée d'un cylindre elliptique dont la coupe a un foyer au centre de ladite source de lumière (24) et l'autre foyer à proximité de l'ouverture (18) dudit cadran (12).

5. Indicateur éclairé selon la revendication 2, caractérisé en ce que ladite plaque de guidage de la lumière est agencée pour être perpendiculaire à ladite plaque transparente (14) afin que la face de ladite plaque de guidage de la lumière soit perpendiculaire à la face de ladite plaque transparente (14).

6. Indicateur éclairé selon la revendication 5, caractérisé en ce que la partie intégralement connectée où ladite plaque de guidage de la lumière et ladite plaque transparente (14) sont intégralement connectées, est formée avec une quatrième surface réfléchissant la lumière (34, 36) par laquelle la lumière qui y parvient de la source de lumière (24) est réfléchie vers ladite première surface réfléchissant la lumière (18a, 18b).

**Patentansprüche**

1. Beleuchtetes Zeigermeßinstrument mit einer Skalenplatte (12), welche eine lichtdurchlässige Platte (14) aufweist und mit einer hindurchgehenden Öffnung (18) ausgebildet ist, mit einer durch die Öffnung (18) der Skalenplatte (12) hindurchgehenden Welle (20), mit einem Zeiger (22) aus einem lichtdurchlässigen Material, der mit seinem Befestigungsabschnitt an der Welle (20) befestigt ist, um sich in Abhängigkeit von der Drehung der Welle (20) um ihre Achse über die Fläche der Skalenplatte zu bewegen, mit einer Lichtleiterplatte (14b, 14c, 14b', 14c') aus einem lichtdurchlässigen Material, welche ganzheitlich mit einem Umfangsrandabschnitt der lichtdurchlässigen Platte (14) verbunden ist, wobei die Lichtleiterplatte an ihrem Endabschnitt in einem Abstand von dem Umfangsrandabschnitt der lichtdurchlässigen Platte mit einer runden Ausnehmung (26, 28) ausgebildet ist, mit einer mit Zwischenraum in der runden Ausnehmung angeordneten Lichtquelle (24) zur Erzeugung von Licht, welches innerhalb der Lichtleiterplatte, der lichtdurchlässigen Platte (14) und dem Zeiger (22) zur gesamten Beleuchtung der lichtdurchlässigen Platte und des Zeigers von innen her verläuft, mit einer ersten, lichtreflektierenden Oberfläche (18a, 18b), die an einer Wand ausgebildet ist, welche die Öffnung (18) der Skalenplatte (12) begrenzt, wobei die erste, lichtreflektierende Oberfläche (18a, 18b) das auf sie auffallende Licht in Richtung zu dem Befestigungsabschnitt des Zeigers reflektiert, mit einer zweiten, lichtreflektierenden Oberfläche (22a), die an dem Befestigungsabschnitt des Zeigers ausgebildet ist um das Licht von der ersten, lichtreflektierenden Oberfläche (18a, 18b) in Richtung auf den Zeigerabschnitt des Zeigers (22) zum lenken, und mit einer dritten, lichtreflektierenden Oberfläche (30, 32), die an einem Umfangsrandabschnitt der Lichtleiterplatte ausgebildet ist, wobei die dritte lichtreflektierende Oberfläche derart ausgebildet ist, daß sie Licht, welches in die Lichtleiterplatte durch die runde Ausnehmung eintritt, in Richtung auf den ganzheitlich verbundenen Abschnitt reflektiert, wo die Lichtleiterplatte und die lichtdurchlässige Platte miteinander ganzheitlich verbunden sind, um das Licht auf die erste, lichtreflektierende Oberfläche zu fokussieren, dadurch gekennzeichnet, daß am Boden der runden Ausnehmung eine konvexe Oberfläche (26b, 28b) ausgebildet ist, um eine konvexe Linse zu bilden, so daß sich die von der Lichtquelle (24) dorthin gelangenden Lichtstrahlen parallel innerhalb der Lichtleiterplatte in Richtung zu der ersten, lichtreflektierenden Oberfläche (18a, 18b) der lichtdurchlässigen Platte (14) fortpflanzen, daß die Öffnung (18) an ihrem nach innen gerichteten Abschnitt erweitert ist, um einen allgemein dreieckigen, prismenförmigen Raum zu bilden, daß die erste, lichtreflektierende Oberfläche (18a, 18b) an einer von zwei geneigten, flachen Oberflächen ausgebildet ist, welche teilweise den dreieckigen, prismenförmigen Raum begrenzen, und daß die zweite, lichtreflektierende Oberfläche (22a) unter einem von Null verschiedenen Winkel zur Achse der Welle (20) und in Längsrichtung des Zeigers (22) verläuft.

2. Beleuchtetes Zeigermeßinstrument nach Anspruch 1, dadurch gekennzeichnet, daß die Oberfläche (26a, 28a; 26'a, 28'b) die die runde Ausnehmung (26, 28) begrenzt, eine teilzylindrische Oberfläche eines Zylinders ist, dessen Längsachse durch die Mitte der Lichtquelle (24) senkrecht zu der Fläche der Lichtleiterplatte hindurchgeht.

3. Beleuchtetes Zeigermeßinstrument nach Anspruch 2, dadurch gekennzeichnet, daß die Lichtleiterplatte sich seitlich von der lichtdurchlässigen Platte (14) nach außen erstreckend angeordnet ist, so daß die Fläche der Lichtleiterplatte bündig mit der Fläche der lichtdurchlässigen Platte (14) ist.

4. Beleuchtetes Zeigermeßinstrument nach Anspruch 3, dadurch gekennzeichnet, daß die dritte, lichtreflektierende Oberfläche (30, 32) unter Bildung eines Teils einer gekrümmten Fläche eines elliptischen Zylinders ausgebildet ist, dessen Querschnitt einen Brennpunkt in der Mitte der Lichtquelle (24) und den anderen Brennpunkt in der Nähe der Öffnung (18) der Skalenplatte (12) aufweist.

5. Beleuchtetes Zeigermeßinstrument nach Anspruch 2, dadurch gekennzeichnet, daß die Lichtleiterplatte senkrecht zu der lichtdurchlässigen Platte (14) angeordnet ist, so daß die Seitenfläche der Lichtleiterplatte normal zu der Seitenfläche der lichtdurchlässigen Platte (14) ist.

6. Beleuchtetes Zeigermeßinstrument nach Anspruch 5, dadurch gekennzeichnet, daß der ganzheitlich verbundene Abschnitt, wo die Lichtleiterplatte und die lichtdurchlässige Platte (14) ganzheitlich miteinander verbunden sind, mit einer vierten lichtreflektierenden Oberfläche (34, 36) ausgebildet ist, durch welche das von der Lichtquelle (24) herkommende Licht in Richtung zu der ersten, lichtreflektierenden Oberfläche (18a, 18b) reflektiert wird.

## FIG. 1

## FIG. 2

## FIG. 3

10'

14a

14

IV

q'
p'
18a 18b
m'
V
24

B'
×
20 18
24

34

s'
r'
36
V

IV

## FIG. 4

10'

14a

14c'
32
36
q p
24
28b
A'
m
W
r s
28a
32

## FIG. 5

10'

14a 16
34
36
14b'
18a 18b 14
14c'
12
24
24

2